# EUROPÄISCHE PATENTSCHRIFT

(11) **EP 0 610 457 B1**
(45) Veröffentlichungstag und Bekanntmachung des Hinweises auf die Patenterteilung: **18.09.1996**
(21) Anmeldenummer: 93911739.6
(22) Anmeldetag: 11.05.1993
(51) Int. Cl.: B60J 7/22

(54) **WINDSTOP FÜR CABRIOS**
TURBULENCE-REDUCTION DEVICE FOR CABRIOLETS
COUPE-VENT POUR CABRIOLETS

(30) Priorität: 30.07.1992 DE 9210199 U
(43) Veröffentlichungstag der Anmeldung: 17.08.1994
(73) Patentinhaber: ORIS FAHRZEUGTEILE HANS RIEHLE GmbH, D-71616 Möglingen (DE)
(72) Erfinder: RIEHLE, Hans, D-7140 Ludwigsburg (DE)
(86) Internationale Anmeldenummer: DE9300409
(87) Internationale Veröffentlichungsnummer: WO9403342

(56) Entgegenhaltungen:
- EP-A- 0 316 749
- DE-C- 3 914 036
- DE-U- 9 012 716
- DE-U- 9 204 439

## Beschreibung

Die Erfindung bezieht sich auf eine Vorrichtung zur Beeinflussung von Luftströmungen in Cabriolets o.dgl. Kraftfahrzeugen, die im wesentlichen aus einer Gewebefolie zur Abdeckung des Raumes über den Rücksitzen etwa in horizontaler Richtung liegend und zur Abdeckung des Raumes hinter den Vordersitzen schräg aufwärts nach vorn gerichtet besteht.

Bei bekannten Vorrichtungen dieser Art, z.B. DE-C-3 914 036, die bei schneller Fahrt die als außerordentlich störend empfundenen Luftwirbel, die von hinten in den Bereich der Vordersitze einfallen, verhindern, weisen Metallrahmen für die Gewebefolie auf, so daß es gewisse Schwierigkeiten bereitet, die Vorrichtung im Nichtgebrauchszustand im Fahrzeug mitzuführen, insbesondere dann, wenn, wie bei vielen Cabriolets üblich, der Kofferraum verhältnismäßig klein ist.

Demgegenüber macht es sich die Erfindung zur Aufgabe, eine Vorrichtung anzugeben, die bei geringem Gewicht bei Nichtgebrauch platzsparend untergebracht werden kann.

Die gestellte Aufgabe wird gemäß der Erfindung dadurch gelöst, daß die Gewebefolie mit flexiblen Mitteln allseitig an den Rändern eingefaßt ist und lediglich am vorderen oberen Ende, am hinteren Ende und dazwischen an der Abwinklung von dem horizontal liegenden Teil in den schräg aufwärts gerichteten Teil horizontal liegende Versteifungen besitzt, wobei der schräg aufwärts gerichtete Teil der Gewebefläche mit Mitteln zur Befestigung an den Rückenlehnen der Vordersitze oder unmittelbar oder mittelbar an deren Kopfstützen oder gegebenenfalls an einem Überrollbügel versehen ist und an den Endpunkten der Versteifungen zwischen dem horizontalen Teil der Gewebefolie und dem schräg aufwärts gerichteten Teil und den Endpunkten der Versteifung am hinteren Ende flexible Bänder o.dgl. angreifen, deren freie Enden jeweils zusammengefaßt mit Einhängemitteln versehen sind, derart, daß die Bänder schräg nach vorn gerichtet zur Straffhaltung der Gewebefolie seitlich im Fahrzeug an geeigneten Stellen einhängbar sind.

Durch die Erfindung wird vorteilhaft erreicht, daß die Gewebefolie mitsamt ihren Versteifungen zusammengelegt oder zusammengerollt werden kann und vorteilhaft untergebracht werden kann, z.B. direkt vor den hinteren Sitzen.

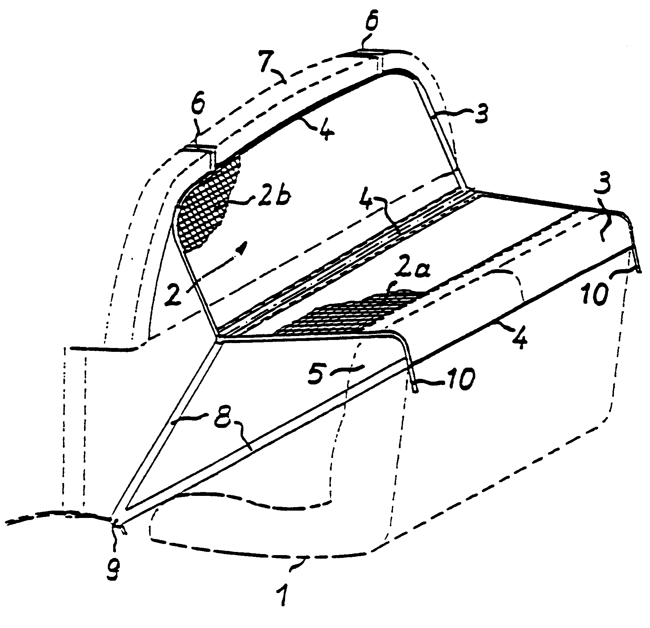

Vorteilhafte Ausgestaltungen der Erfindung können den Unteransprüchen und der Beschreibung der Zeichnung entnommen werden, in der in einem Ausführungsbeispiel in Schrägansicht die montierte Gewebefolie dargestellt ist.

In einem Cabriolet ist zwischen den Vordersitzen und den Hintersitzen 1 eine Gewebefolie 2 vorgesehen, von der sich ein horizontal liegender Teil 2a von den Rückenlehnen 3 der hinteren Sitze 1 bis vor die Rückenlehnen der Vordersitze erstreckt, von wo sich ein Teil 2b anschließt, der schräg aufwärts nach vorn gerichtet ist. Die Gewebefolie 2 ist allseitig an den Rändern mit flexiblen Mitteln 3 eingefaßt, die aus Leder, aber auch aus einem geeigneten Kunststoff bestehen können. Es ist auch denkbar, dafür textile Einfassungsbänder zu verwenden. Die Gewebefolie 2 besitzt Versteifungen 4, die aus Metallstäben, Metallrohren, oder aus Kunststoff bestehen und von denen eine Versteifung 4 in die Einfassung 3 am vorderen oberen Ende der Gewebefolie eingenäht oder eingeklebt ist, eine zweite Versteifung 4 liegt in der Knickstelle zwischen den Teilen 2a, 2b und eine dritte Versteifung 4 liegt am horizontalen Ende der Gewebefolie, an dem die Einfassung 3 verhältnismäßig breit über den Rückenlehnen 5 liegt. An der Versteifung 4 am vorderen Ende der Gewebefolie greifen Haken 6 an, mit denen der Teil 2b an einem Überrollbügel 7 durch Einhängen befestigt ist. An den beiderseitigen Enden der Versteifung 4 zwischen den Teilen 2a, 2b und an den Enden der Versteifung 4 am hinteren Ende des Teiles 2a greifen Gummibänder 8 an, die schräg nach vorn bei 9 zusammengeführt sind und dort mit Haken o.dgl. Mitteln an der Innenseite der Karosserie z.B. durch Einhängen befestigt sind. Der Befestigungspunkt muß dabei vor der Versteifung 4 zwischen den Teilen 2a, 2b liegen, so daß die Gewebefolie straff gespannt ist.

Bei Nichtgebrauch der Gewebefolie 2 kann diese mit ihren Befestigungsmitteln zusammengelegt oder eingerollt werden und in den breiten Teil der Einfassung am hinteren Ende der Gewebefolie eingepackt werden. Mit vorgesehenen Bändern 10 kann das ganze verschnürt und dann beispielsweise vor den Rücksitzen im Fahrzeug abgelegt oder gehaltert werden.

Sofern kein Überrollbügel vorhanden ist, kann der Teil 2b an den Rückenlehnen der Vordersitze oder an deren Kopfstützen angelenkt werden. In letzterem Fall empfiehlt sich die Verwendung von beispielsweise aus Kunststoff bestehenden Adaptern, die an den Trägern der Kopfstützen befestigbar sind. Für die Befestigungsmittel und Spannmittel, die je nach Fahrzeugtyp an unterschiedlichen Stellen der Versteifung 4 angreifen können, wären auch Druckknopfverbindungen denkbar. Schließlich ist es möglich, die Gewebefolie, die seither aus textilem Material besteht, aus Metall zu fertigen. Für die Gewebefolie kann auch farbiges Material Verwendung finden und gegebenenfalls kann die Gewebefolie als Werbeträger ausgebildet sein.

## Patentansprüche

1. Vorrichtung zur Beeinflussung von Luftströmungen in Cabriolets o.dgl. Fahrzeugen, im wesentlichen bestehend aus Gewebefolie zur Abdeckung des Raumes über den Rücksitzen etwa horizontal liegend und zur Abdeckung des Raumes hinter den Vordersitzen schräg aufwärts nach vorn gerichtet, dadurch gekennzeichnet, daß die Gewebefolie (2) mit flexiblen Mitteln (3) allseitig an den Rändern eingefaßt ist und lediglich am vorderen oberen Ende, am hinteren Ende und dazwischen ab der Abwinklung von dem horizontal liegenden Teil (2a) in den schräg aufwärts gerichteten Teil (2b) horizontal liegende Versteifungen (4) besitzt, wobei der schräg aufwärts gerichtete Teil der Gewebefläche mit Mitteln zur Befestigung an den Rückenlehnen der Vordersitze oder mittelbar oder unmittelbar an deren Kopfstützen oder gegebenenfalls an einem Überrollbügel (7) versehen ist und an den Endpunkten der Versteifungen zwischen dem horizontalen Teil der Gewebefolie und dem schräg aufwärts gerichteten Teil und den Endpunkten der Versteifung am hinteren Ende flexible Bänder (8) oder dgl. angreifen, deren freie Enden jeweils zusammengefaßt mit Einhängemitteln versehen sind, derart, daß die Bänder schräg nach vorn gerichtet zur Straffhaltung der Gewebefolie seitlich im Fahrzeug an geeigneten Stellen einhängbar sind.

2. Vorrichtung nach Anspruch 1, dadurch gekennzeichnet, daß die die Gewebefolie (2) am hinteren Ende einfassenden flexiblen Mittel (3) so breit ausgebildet sind, daß die oberen Teile der Rückenlehnen bedeckt sind und die Versteifung (4) hinter den Rückenlehnen liegt.

3. Vorrichtung nach Anspruch 1 und 2, dadurch gekennzeichnet, daß an den flexiblen Mitteln (3) Bänder o.dgl., gegebenenfalls für einen Klettverschluß geeignete Bänder (10), befestigt sind, mit denen die Gewebefolie (2) eingerollt oder zusammengelegt mittels der breiten flexiblen Mittel (8) einpackbar und durch die Bänder (10) verschnürbar ist.

4. Vorrichtung nach den Ansprüchen 1 bis 3, dadurch gekennzeichnet, daß die Versteifungen (4) aus Metallstäben oder Metallrohren bestehen.

5. Vorrichtung nach den Ansprüchen 1 bis 4, dadurch gekennzeichnet, daß die Versteifungen (4) aus Kunststoffschienen o.dgl. bestehen.

6. Vorrichtung nach dem Anspruch 1 bis 5, dadurch gekennzeichnet, daß zur Befestigung des oberen vorderen Endes der Gewebefolie (2) an den Kopfstützen der Vordersitze besondere Adapter vorzugsweise aus Kunststoff vorgesehen sind, die an den Halterungen der Kopfstützen angreifen.

7. Vorrichtungen nach den Ansprüchen 1 bis 6, dadurch gekennzeichnet, daß im Bereich der Versteifungen (4) die flexiblen Mittel (3) zur Einfassung der Ränder der Gewebefolie (2) mit Schlitzen versehen sind, durch welche Befestigungs- und/oder Spannbänder (8) an den Versteifungen (4) befestigbar sind.

8. Vorrichtung nach den Ansprüchen 1 bis 7, dadurch gekennzeichnet, daß Druckknöpfe vorgesehen sind, mit deren Hilfe Befestigungs- und/oder Spannbänder (8) an der Gewebefolie (2) befestigbar sind.

9. Vorrichtung nach den Ansprüchen 1 bis 8, dadurch gekennzeichnet, daß die Gewebefolie (2) aus Metall besteht.

10. Vorrichtung nach den Ansprüchen 1 bis 9, dadurch gekennzeichnet, daß die Gewebefolie (2) farbig ausgeführt ist.

11. Vorrichtung nach den Ansprüchen 1 bis 10, dadurch gekennzeichnet, daß die Gewebefolie (2) zumindest in ihrem schräg nach vorn gerichteten Teil als Werbeträger ausgebildet ist.

## Claims

1. Device for influencing air flows in cabriolets or similar vehicles, consisting essentially of fabric sheet disposed approximately horizontally in order to cover the space above the rear seats and directed diagonally upwards and forwards in order to cover the space behind the front seats, characterized in that the fabric sheet (2) is edged on all sides by flexible means (3) and comprises horizontally disposed stiffeners (4) merely at the front upper end, at the rear end and therebetween at the angled transition from the horizontally disposed part (2a) to the diagonally upwards directed part (2b), the diagonally upwards directed part of the fabric surface being provided with means for attachment to the backrests of the front seats or directly or indirectly to the head restraints thereof or, where appropriate, to a rollover bar (7) and the end points of the stiffeners between the horizontal part of the fabric sheet and the diagonally upwards directed part and the end points of the stiffener at the rear end being engaged by flexible straps (8) or similar, the free ends of said flexible straps (8) being brought together on either side and being provided with securing means in such a manner that the straps, directed diagonally forwards, are able to be secured at suitable points on the sides of the vehicle in order to keep the fabric sheet taut.

2. Device according to claim 1, characterized in that the flexible means (3) edging the fabric sheet (2) at the rear end are of such width that the upper parts of the backrests are covered and the stiffener (4) is behind the backrests.

3. Device according to claims 1 and 2, characterized in that tapes or similar, possibly tapes (10) suitable for a hook-and-pile fastener, are attached to the flexible means (3), with which tapes (10) the fabric sheet (2), rolled up or folded up, is able to be wrapped up by means of the wide flexible means (8) and to be tied by the tapes (10).

4. Device according to claims 1 to 3, characterized in that the stiffeners (4) consist of metal bars or metal tubes.

5. Device according to claims 1 to 4, characterized in that the stiffeners (4) consist of plastic rails or similar.

6. Device according to claims 1 to 5, characterized in that special adapters, preferably made of plastic, are provided for attaching the upper front end of the fabric sheet (2) to the head restraints of the front seats, said special adapters engaging the holders of the head restraints.

7. Devices according to claims 1 to 6, characterized in that the flexible means (3) for edging the fabric sheet (2) are provided with slits in the region of the stiffeners (4), through which slits securing and/or tightening straps (8) are able to be attached to the stiffeners (4).

8. Device according to claims 1 to 7, characterized in that press studs are provided, by means of which press studs securing and/or tightening straps (8) are able to be attached to the fabric sheet (2).

9. Device according to claims 1 to 8, characterized in that the fabric sheet (2) consists of metal.

10. Device according to claims 1 to 9, characterized in that the fabric sheet (2) is coloured.

11. Device according to claims 1 to 10, characterized in that the fabric sheet (2) is, at least in its diagonally forwards directed part, in the form of an advertising medium.

## Revendications

1. Dispositif destiné à améliorer l'écoulement de l'air sur les cabriolets ou autres véhicules semblables, principalement constitué d'une toile disposée à peu près horizontalement pour couvrir l'espace au-dessus des sièges avant et orientée obliquement vers le haut et vers l'avant pour couvrir l'espace derrière les sièges avant, caractérisé en ce que la toile (2) est bordée de tous les côtés de moyens flexibles (3) et ne possède des renforts (4) disposés horizontalement qu'à son extrémité avant, son extrémité arrière et à la transition entre la partie horizontale (2a) et la partie inclinée (2b), en ce que ladite partie inclinée comporte des moyens permettant de la fixer soit aux dossiers des sièges avant, soit directement ou indirectement aux appuie-tête ou éventuellement à un arceau de sécurité (7) et en ce que les renforts situés à la transition entre la partie horizontale (2a) et la partie inclinée (2b) de même que le renfort arrière de la partie horizontale (2a) possèdent de chaque côté des attaches destinées à la fixation de sangles flexibles (8) ou autres, se rejoignant à leur extrémité libre et comportant des moyens d'accrochage permettant d'arrimer les sangles sur les côtés à des points appropriés du véhicule placés en avant des points d'attache supérieurs, de manière à tendre la toile.

2. Dispositif selon la revendication 1, caractérisé en ce que les moyens flexibles (3) à l'extrémité arrière de la toile (2) ont une largeur telle qu'ils recouvrent complètement le haut des dossiers des sièges arrière et que le renfort (4) se trouve positionné derrière les dossiers.

3. Dispositif selon les revendications 1 et 2, caractérisé en ce que les moyens flexibles (3) comportent des bandes (10) ou autres, éventuellement de type Velcro, permettant de sangler la toile (2) à l'aide des moyens flexibles (8) et de la nouer au moyen des bandes (10) après l'avoir enroulée ou repliée.

4. Dispositif selon les revendications 1 à 3, caractérisé en ce que les renforts (4) sont des barres de métal ou des tubes métalliques.

5. Dispositif selon les revendications 1 à 4, caractérisé en ce que les renforts (4) sont des barres en matière plastique ou en une autre matière similaire.

6. Dispositif selon les revendications 1 à 5, caractérisé en ce que des adaptateurs spéciaux, de préférence en matière plastique, venant s'engager dans les supports d'appuie-tête sont prévus pour attacher l'extrémité avant supérieure de la toile (2) aux appuie-tête des sièges avant.

7. Dispositif selon les revendications 1 à 6, caractérisé en ce que les moyens flexibles (3) bordant la toile (2) comportent, dans la zone des renforts (4), des fentes permettant le passage et la fixation des bandes d'attache et/ou de serrage (8).

8. Dispositif selon les revendications 1 à 7, caractérisé en ce que le dispositif comporte des boutons-pression permettant de fixer les bandes d'attache et/ou de serrage (8) à la toile (2).

9. Dispositif selon les revendications 1 à 8, caractérisé en ce que la toile (2) est en métal.

10. Dispositif selon les revendications 1 à 9, caractérisé en ce que la toile (2) est colorée.

11. Dispositif selon les revendications 1 à 10, caractérisé en ce que au moins la partie inclinée de la toile (2) fait office de support publicitaire.
